# EUROPEAN PATENT APPLICATION

(11) **EP 1 075 990 A2**
(43) Date of publication of application: **14.02.2001**
(21) Application number: 00306734.5
(22) Date of filing: 07.08.2000
(51) Int. Cl.: B60S 1/34

(54) **Surface wiping means**

(30) Priority: 07.08.1999 GB 9918628
(71) Applicant: Goulding, Darran, Pontardulais, Swansea SA4 1JW (GB)
(72) Inventor: Goulding, Darran, Pontardulais, Swansea SA4 1JW (GB)
(74) Representative: Gallafent, Antony Xavier

(57) **Abstract**

A surface wiping means (2) is described. The surface wiping means comprises a surface engaging, longitudinally extending blade (4) and a blade support means (6) in which the wiping means (2) is adapted to engage with a wiper motive means (8,20). The blade (4) and blade support means (6) are jointly biased by a biasing means so that the blade forms a concave arc radially inward of the blade support means when no counter forces act on the blade (4). The surface wiping means (2) is so constructed that the magnitude of the bias decreases with distance along the blade from the position where the motive means (8,20) engages with the wiping means (2). The advantage of the present invention is that the wiping means closely follows the contours of the surface and, thus, wipes the surface with greater efficiency than previously known surface wiping means.

## Description

This invention relates to surface wiping means, and in particular, surface wiping means for curved or variably curved surfaces.

According to the present invention there is provided a surface wiping means. The surface wiping means comprises a surface engaging, longitudinally extending blade and a blade support means in which the wiping means is adapted to engage with a wiper motive means, the blade and blade support means being jointly biased by biasing means so that the blade forms a concave arc radially inward of the blade support means when no counter forces act on the blade, and the magnitude of the bias decreases with distance along the blade from a position where the motive means engages with the wiping means.

It is preferred that the motive means engages with the wiping means proximal the first end of the blade. In an alternative, the motive means engages with substantially the mid point of the wiping means.

The surface wiping means as a whole is held against the surface that it is to be wiped by way of the wiper motive means. The advantage of the wiping means of the present invention is that, with a first part of the blade held against a surface, the bias of the biasing means causes substantially the whole of the remainder of the blade to engage with the surface irrespective of whether the surface, when viewed from behind the blade, is planar, concave or convex.

The magnitude of the bias decreases with distance from the first end of the blade. The benefit of such an arrangement is that it helps prevent an end of the blade distal to the engagement means acting on a surface and causing the intermediate portion of the blade to lift away from that surface. This helps to aid contact between the blade and the surface being wiped along substantially the whole of the length of the blade. The magnitude of the bias may vary continuously along the length of the blade; in a step-wise fashion; or in a mixture of continuous and step-wise fashion along the length of the blade. This provides the same benefits as previously discussed.

The absolute magnitude of the bias at different positions along the length of the blade may be adapted to suit the surface to be wiped and the curvature thereof.

In a preferred embodiment, the blade and blade support means are unitary. Preferably they are made by a single moulding of an appropriate material.

The biasing means may be located within the blade support, within the blade, or even constitute the blade support itself.

The biasing means is most preferably an arcuate leaf spring. Alternatively, the biasing caused by the biasing means is generated by the material from which the blade and/or blade support is constructed. In one preferred embodiment an elastically deformable material is moulded into an arcuate shape, the material being of decreasing thickness as the distance from the mounting means increases. This change of thickness causes a change in the magnitude of the bias toward the arcuate shape of the mounting means when the mounting means is deformed from that arcuate shape.

It is a particularly preferred function of the wiper means of the present invention that the length of the blade support and the blade can be altered by cutting them to the required length without loss of functionality. This is a particular advantage because it allows the supply of a single item for all of a particular type of surface to be wiped. The user of the wiper can then adapt it to suit the particular surface to be wiped. This contrasts with presently known wiping means where the wiping means have to be purchased in a form previously adapted for the surface to be wiped.

The wiper of the present invention may be used to wipe a surface that is planar or concave or convex along the length of the blade. In a particular embodiment, the blade of the present invention may be used to wipe the surface of a window on a vehicle. Where the vehicle is a car, lorry, van or the like, the window being wiped can be the windscreen, the rear window or a side window. It is a particular advantage of the present invention that in addition to being able to wipe the generally convex outer surface of, for instance, a rear window, provided that suitable motive means are provided, the same blade can be used to wipe the concave inner surface of that same rear window. It is a particular advantage of the present invention that when combined with a suitable motive means a wiper can be disposed to wipe the inner surface of a rear window. This allows rapid clearance of any condensation and accumulated dirt from the inside of the rear window.

The motive means for this particular preferred use of the present invention can be a standard wiper motor as currently used for connection with windscreen wipers. Alternatively, the motive means can constitute a simple bi-directional or reversible electric motor driving a drive chain which causes the wiping means to move across the surface to be wiped with the blade substantially maintaining a single orientation in relation to one edge of the surface being wiped or some other fixed reference.

In alternative embodiments, the motive means can be so configured and constructed that a unidirectional motor can be employed where reciprocal wiping of the surface to be wiped with the blade substantially maintaining a single orientation in relation to an edge of the surface to be wiped, or some other fixed reference.

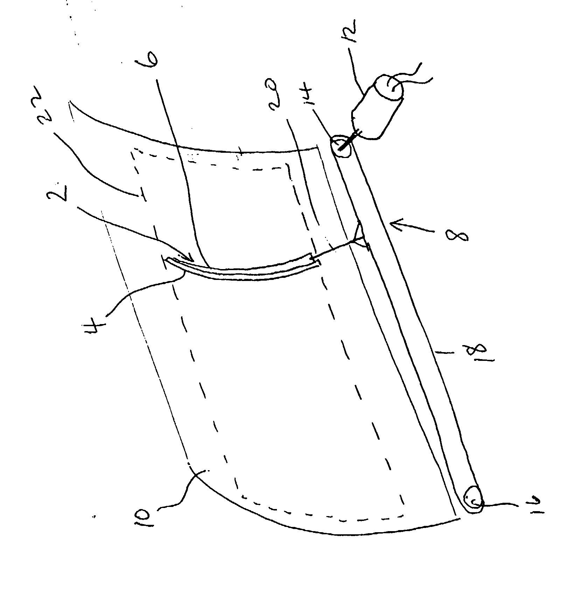

The present invention will be further described and explained with reference to the accompanying drawing in which the figure shows an embodiment of the present invention.

Referring to the figure: a surface wiping means (2) comprising a longitudinally extending blade (4) and a blade support means (6) is supported by a motive means (8). Motive means (8) holds surface wiping means (2) in contact with a concave face of a surface (10).

Blade (4) is supported on blade support means (6). Blade support means (6) will, when not subject to any substantial asymmetrical forces, adopt an arcuate configuration with the blade (4) being the closest part of the surface wiping means (2) to the focus of the arc.

Blade support means (6) is made from an elastically deformable material or a resilient material.

Motive means (8) comprises a bi-directional electrical motor (12) which is in direct communication with a first pulley (14). Motor (12) and first pulley (14) are located adjacent to and at a first end of the surface (10) that is to be wiped by wiper means (2). Adjacent to and at a second, opposite, end of surface (10) is a second pulley wheel (16). Pulley wheel (16) is mounted on rotation means that are not shown.

Extending between and passing around opposing halves of pulley wheels (14) and (16) is a drive chain (18). Fixed to drive chain (18) and extending in a direction substantially perpendicular to the direction of drive chain (18) at the point of attachment is a mounting bar (20). A first end of mounting bar (20) is attached to drive chain (18) and the second end is attached to blade support means (6). Mounting bar (20) passes through a guide means (not shown). The guide means holds the end of mounting bar (20) attached to blade support (6) at a fixed distance from surface (10).

One or both of mounting bar (20) and the guidance slot (not shown) are configured and adapted to bias the blade support means (6) against the surface to be wiped.

In operation, bi-directional motor (12) will rotate pulley (14) in a first direction causing the mounting bar (20) and hence wiping means (2) to travel along surface (10) until a predetermined point. At that point sensors (not shown) detect the position of mounting bar (20) and wiper means (2) and cause bi-directional motor (12) to reverse its direction of rotation. This causes pulley (14) to reverse its direction of rotation and the mounting bar and wiper means to travel toward the other end of surface (10). When mounting bar (20) and wiper means (2) arrive at the other end of surface (10), a second set of sensors (not shown) again detects the position of support bar (20) and wiper means (2) and again reverses the direction of rotation of motor (12). In this fashion an area marked by dashed line (22) on the figure is repeatedly wiped by blade (4).

## Claims

1. A surface wiping means (2) comprising a surface engaging, longitudinally extending blade (4) and a blade support means (6) in which the wiping means (2) is adapted to engage with a wiper motive means (8,20), the blade (4) and blade support means (6) being jointly biased by a biasing means so that the blade forms a concave arc radially inward of the blade support means when no counter forces act on the blade (4), and the magnitude of the bias decreases with distance along the blade from the position where the motive means (8,20) engages with the wiping means (2).

2. A surface wiping means (2) according to claim 1 in which the blade (4) and the blade support means (6) are unitary.

3. A surface wiping means (2) according to claim 1 or 2 in which the bias is generated by biasing means located within the blade support (6).

4. A surface wiping means (2) according to claim 1 or 2 in which the bias is generated by biasing means located within the blade (4).

5. A surface wiping means (2) according to claim 1 or 2 in which the blade support (6) is the biasing means.

6. A surface wiping means (2) according to claim 1 or 2 in which the biasing means is located within the blade (4).

7. A surface wiping means (2) according to claim 1 or 2 in which the biasing means is the blade (4).

8. A surface wiping means (2) according to any one of the preceding claims in which the magnitude of the bias decreases continuously along the length of the blade (4) from the position where the motive means (8,20) engages with the wiping means (2).

9. A surface wiping means (2) according to any preceding claim in which the magnitude of the bias decreases in a stepwise fashion along the length of the blade (4) from the position where the motive means (8,20) engages with the wiping means.

10. A surface wiping means (2) according to any preceding claim in which the biasing means is an arcuate leaf spring.

11. A surface wiping means (2) according to any preceding claim in which the surface wiping means (2)is adapted for the surface (10) to be wiped by cutting through the blade (4) and blade support means (6).
